# EUROPEAN PATENT APPLICATION

(11) **EP 4 513 141 A1**
(43) Date of publication of application: **26.02.2025**
(21) Application number: 23193306.0
(22) Date of filing: 24.08.2023
(51) Int. Cl.: G01C 21/34, H04W 40/02, H04W 4/024, H04W 4/44

(54) **METHOD AND APPARATUS FOR DETERMINING ROUTE FEASIBILITY**

(71) Applicant: Volkswagen AG, 38440 Wolfsburg (DE)
(72) Inventor: Montero Bayo, Luca, 12049 Berlin (DE); Pfadler, Andreas, 13357 Berlin (DE)

(57) **Abstract**

The present disclosure is related to a method for determining route feasibility by a user equipment, UE, the method comprising the steps of: determining (201) route information, determining (202) a level of required redundancy of one or more communication links for a route, the route being determined according to the route information, and determining (203) feasibility of the route according to the level of required redundancy of one or more communication links. A corresponding method for determining route feasibility by a server is also provided.

## Description

The present disclosure relates to a method and apparatus for determining route feasibility. Particularly, the method is applicable when there are more than one mobile network operators, MNOs, providing mobile communication service to a receiver (or otherwise to a terminal or more generically to a device).

Prior art defines an automated vehicle, also known as an AV, an autonomous vehicle, a self-driving car, a driverless car, a robo-car, or a robotic car, which is a vehicle that is capable of sensing its environment and moving safely with little or no human input. The transition from human-operated to fully autonomous driving has led to a growing need for constant and reliable connectivity, which is essential to ensure safe operation. Connectivity is critical for autonomous navigation and for responding to safety-critical situation. The vehicle needs to have a constant and dependable radio access to a reliable network that can provide remote assistance to the vehicle without a safety driver particularly in case of unknown or critical scenarios.

Further, automotive applications and mobile communications become more and more entangled, particularly due to the increasing interest in automatic driving that requires larger amounts of data when compared to conventional driving. These data amounts are provided partially by the vehicle itself (i.e., by sensors thereof) and partially via an air/radio interface. Via the air interface such as a vehicle to vehicle, V2V, communication or a vehicle to infrastructure, V2I, communication or a vehicle to everything, V2X, communication is carried out, the latter including communication with road side units, RSUs.

In such state-of-the-art systems efficient mobile communication is essential, which depending on a criticality of a particular operation must also meet certain requirements concerning quality of service, QoS.

In this context, for example a 3GPP 5G radio communication system can support demanding QoS requirements of many advanced V2X use cases and their corresponding applications. However, efficient driving, especially of automated vehicles, may be affected by sudden changes of the provided QoS. For that reason, a prediction of QoS changes and early notification of these predicted changes to vehicles recently have been enabled for example by the 3GPP 5G communication systems. This approach enables vehicles to avoid or mitigate effects of sudden QoS changes at application level. Naturally such predicted QoS influences possibilities of data delivery.

A predicted QoS, pQoS, may for example be used to plan execution of a route or on a lower level to plan a specific maneuver of an AV. If, for example, the pQoS does not meet the requirements long enough, an application will not perform a given action. Typically, applications adapt to a pQoS time series, so that an improved or even optimal target distance planning can be achieved to fully utilize the most out of the predicted QoS feature.

It is already foreseen that AVs will need the support of multiple MNOs. To address the topic of multi MNO architectures, its API, and its challenges the CAMARA project has been started i.e. the "CAMARA: Telco Global API Alliance" aimed at Enabling Seamless Access to Telco Network Capabilities. CAMARA works in close collaboration with the GSMA Operator Platform Group to align API requirements and publish API definitions and APIs. Different MNOs have distinct networks and also use distinct pQoS models and learning methods to predict the future QoS for user devices such as AVs. Also, usually the pQoS levels differ at one location between different MNOs. Regardless of the specific perks for implementation, multi-MNO connectivity adds a layer of redundancy to the channel that can be used for increased reliance on the link. In this paradigm, a conventional approach is to balance the traffic among MNOs based on link quality, location or upon shortages of the currently active one.

It is thus an object of the present disclosure to overcome or reduce at least some of the drawbacks of the prior art and to provide a method for improving service reliability in critical applications in mobile communication. The given task is solved by the subject-matter of the independent claim 1. Advantageous embodiments of the invention can further be gained from the dependent claims and/or optional features of the description.

### Description of the invention

A first aspect of the invention refers to a method for determining route feasibility by a user equipment, UE, the method comprising the steps of: determining route information, determining a level of required redundancy of one or more communication links for a route, the route being defined according to the route information, and determining feasibility of the route according to the level of required redundancy of one or more communication links.

The benefit of the method according to the first aspect of the present disclosure is that due to planning a route according to a required level of required redundancy, reliability of the communication which is required for certain applications (e.g. in a context of autonomous driving) is improved. This can be enabled by taking into account the base stations positions while differentiating between MNOs (including independent backhaul of the providers). In other words it may not be sufficient to only know the position of the base stations but the required redundancy also needs to be determined.

The UE may be an AV or a part thereof or any other terminal capable of processing route information. The determination of a route will typically comprise determination of a start and an end point as well as any optional via points. In some cases the route information may be more precise and already include specific route segments between the start and the destination. It may be the case that an already specifically planned route is to be followed, which may be generated by providing the start, end and one or more via points to a route planning module, which may be internal or external to the terminal. The route information may also include a start time information and vehicle type information so that a timing prediction can be made for route feasibility determination. It is clear that the step of determining feasibility may require that information on redundancy of one or more communication links is first made available to the terminal.

According to an option of the first aspect of the present invention, the method further comprises a step of adjusting the route information so that the criterion of the level of required redundancy of one or more communication links is met for the route according to the adjusted route information. This step may be useful so that the terminal may obtain a route definition that meets the criterion of the level of required redundancy of one or more communication links. Such adjusted route will frequently be different that a suggested default route not taking into account the criterion.

According to an option according to any previous variants of the first aspect of the present invention, the step of determining the feasibility is executed by transmitting the route information and the level of required redundancy information to one or more remote server(s) and receiving a route feasibility information from at least one of the one or more remote server(s). In this scenario, the determining of the feasibility is delegated to a remote device when the terminal does not have all required information to execute the step internally or does not have the processing power to execute the step internally in reasonable time. According to one aspect, this remote server may be a route management function or network authority function while the second remote server may be a network authority function.

According to an option according to any previous variants of the first aspect of the present invention the route feasibility information indicates a route determined according to the route information for meeting the criterion of the level of required redundancy of one or more communication links.

According to an option according to any previous variants of the first aspect of the present invention, the level of required redundancy of one or more communication links further comprises a quality of service, QoS, indication. When determining redundancy, QoS is an important factor influencing route planning as even if a redundant coverage is present along the route it may not be sufficient to support the terminal's requirements regarding QoS.

According to an option according to the previous variant of the first aspect of the present invention, the step of determining the feasibility further comprises obtaining a predictive Quality of Service, pQoS, information from one or more mobile network operators, MNOs, providing service along the route and matching the pQoS with the QoS indication. The pQoS is a parameter specific for each MNO and likely dependent on location and time (e.g. due to traffic). Therefore, for a given route there may be obtained numerous pQoS for different locations and times at which the terminal is expected to be present at the respective location. Time information may also allow to exclude service providers that may have scheduled maintenance at the given time.

According to an option according to any previous variants of the first aspect of the present invention, the remote server is one or more of network authority function or a route management function. For example, the network authority function, as a functionality of the network, is configured for determining the level of required redundancy for the route and/or the feasibility of the route, preferably the network authority function is configured for calculating a prediction of QoS over a defined route, including a calculation of the effective QoS considering a defined level of required redundancy. As a further example, the route management function, preferably running in the cloud, is configured for determining a suitable route from a start location A to a destination B.

According to an option according to any previous variants of the first aspect of the present invention, the level of required redundancy indicates a number of base stations. It may be the case that the number of base stations is actually lower than the number of MNOs at a given location because MNOs may share physical communication links (virtual MNO). Therefore, there may be a case where, although there are more than one MNOs, there is no redundancy of a physical communication link. This is an important factor when planning routes with communication links redundancy. It is also noted that MNOs are not the only source of communication links because other radio access technologies, RATs, may also be usable (e.g. not mobile as opposed to MNOs). Consequently, any radio communication link may be considered for redundancy verification.

According to an option according to any previous variants of the first aspect of the present invention, the level of required redundancy indicates a number of MNOs or radio access technologies, RATs. In contrast to the scenario above, in other cases it may be sufficient that different MNOs, RATs are available along the route (based on an assumption that different MNOs, RATs provide different communication links).

According to an option according to any previous variants of the first aspect of the present invention, the level of required redundancy indicates dual connectivity, DC, requirement. In order to make the configuration simpler in terms of data required for the configuration, the requirement of redundancy for a route may be formulated such that along the route it is always required that the terminal is operating according to DC.

According to an option according to any previous variants of the first aspect of the present invention, the level of required redundancy further indicates a deviation information indicating allowable deviation along the route from the indicated level of required redundancy. In some cases it may be advantageous to inform the module for determining route feasibility that if it is not possible to determine a feasible route, the redundancy requirements may be decreased for a portion of the route. Such a portion may be indicated with a percentage, for example a deviation of 4% is allowable meaning that the route is generally feasible according to the required redundancy level but in some sections amounting to not more than 4% of the route there may be present lack of redundancy.

A second aspect of the present invention is a method for determining route feasibility by a server, the method comprising the steps of: receiving, from one or more external device(s), route information, receiving, from the one or more external device(s), a level of required redundancy of one or more communication links for a route, the route being defined according to the route information, and determining feasibility of the route according to the level of required redundancy of one or more communication links. According to one aspect, this server may be a network authority function. In a preferred embodiment of this second aspect of the preset invention, the method of the server further comprises the step of transmitting, to the one or more external device(s), a route feasibility information indicating the determined feasibility.

An alternative variant of the second aspect of the present invention is a method for determining route feasibility by a server, the method comprising the steps of: receiving, from one or more external device(s), route information, determining redundancy of one or more communication links for a route, the route being defined according to the route information, and transmitting, to the one or more external device(s), the determined redundancy for the route.

A third aspect of the present invention is an apparatus comprising a processor configured to execute all steps of any of the methods according to any previous variants of the first aspect or the second aspect of the present invention.

A fourth aspect of the present invention is a computer program comprising instructions which, when the program is executed by a computer, cause the computer to carry out all the steps of the method of the first aspect or the second aspect of the present disclosure according to any variants thereof presented above.

A fifth aspect of the present invention is a computer-readable storage medium comprising instructions which, when executed by a computer, cause the computer to carry out all the steps of the method of the first aspect or the second aspect of the present disclosure according to any variants thereof presented above.

Such computer programs are typically executed by utilizing the computing resources in a computing device e.g. a processor or a controller. Applications are stored on a non-transitory medium. An example of a non-transitory medium is a non-volatile memory, for example a flash memory while an example of a volatile memory is RAM. The computer instructions are typically executed by a processor. These memories are exemplary recording media for storing computer programs comprising computer-executable instructions performing all the steps of the computer-implemented method according the technical concept presented herein.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings.

### Brief description of the figures

Reference is now made to the following figures, in order to describe preferred embodiments of the invention in more detail.
- Figure 1A: presents a first example of a route for considering against a level of required redundancy,
- Figure 1B: presents a second example of a route for considering against a level of required redundancy,
- Figure 2A: presents a block diagram of a method of a terminal according to the present invention,
- Figure 2B: presents a block diagram of a method of a remote device according to the present invention,
- Figure 3: presents a first communication scenario for determining route feasibility according to the present invention,
- Figure 4: presents a second communication scenario for determining route feasibility according to the present invention,
- Figure 5: presents a third communication scenario for determining route feasibility according to the present invention, and
- Figure 6: presents a fourth communication scenario for determining route feasibility according to the present invention.

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

As utilized herein, the term "example" means serving as a non-limiting example, instance, or illustration. As utilized herein, the terms "for example" and "e.g." introduce a list of one or more non-limiting examples, instances, or illustrations.

As used herein, the term "and/or" includes any and all combinations of one or more of the associated listed items. Further, the use of "may" when describing embodiments of the present invention refers to "one or more embodiments of the present invention." Further, in the following description of embodiments of the present invention, the terms of a singular form may include plural forms unless the presented context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items and expressions such as "at least one of" when preceding a list of elements, modify the entire list of elements.

Reference will now be made in detail to embodiments which are illustrated in the drawings. Effects and features of the exemplary embodiments will be described with reference to the accompanying drawings. Therein, like reference numerals denote like elements, and redundant descriptions are omitted. The present invention, however, may be embodied in various different forms, and should not be construed as being limited to only the illustrated embodiments herein. Rather, these embodiments are provided solely as examples for fully conveying the aspects and features of the present invention to those skilled in the art.

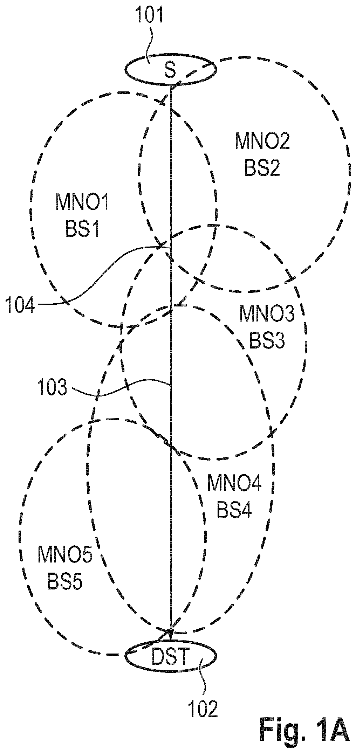

Figure 1A presents a first example of a route to considered under consideration of a level of required redundancy. Dual connectivity using two Mobile Network Operators is state of the art for providing physical network components with redundancy. However, this solution does not always guarantee redundancy in the radio path. In particular, if two MNOs coexist in the same base station, loss of connection with such base station may compromise the connectivity of an AV. This issue is especially relevant if the AV is being directly tele-operated, as actuation commands are wirelessly sent to the vehicle. As such, ensuring end-to-end path redundancy for both wired and wireless connections is crucial for the safety of autonomous driving architectures.

If an AV relies on a network node (e.g. an edge node) to offload a specific task of the autonomous stack (e.g. offloading path prediction algorithms), the AV may require at least two independent radio paths with the network node to guarantee the availability of at least one wireless path in case of link failure. It is up to now undefined how the AV can ensure that the route to follow from a point A to a point B has radio path redundancy. In other scenarios, an application may require in addition to redundancy also certain quality of service, QoS. It is up to now undefined how the redundancy for a certain AV path including the QoS/pQoS can be predicted.

Figure 1A shows a route 103 configured between a starting point 101 and a destination point 102. Numerous MNOs, i.e., MNO1 to MNO 5, provide service along the route 103 by means of the corresponding base stations, BS, i.e., BS1 to BS5. As noted above, MNOs are not the only source of communication links because other RATs, may also be usable. It is clear from figure 1A that at every point of the route at least two BSs are available for the terminal to connect to while at a specific location 104 there are three BSs available for the terminal to connect to i.e. BS1, BS2, BS3. In such a case when the required redundancy level is 2 BSs such route will be determined as feasible.

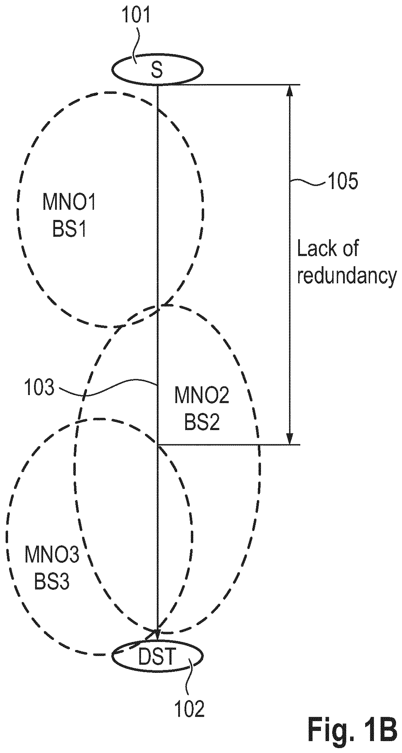

Figure 1B presents a second example of a route for considering against a level of required redundancy. In this scenario a route 103 is configured between a starting point 101 and a destination point 102. Numerous MNOs, i.e., MNO1 to MNO3, provide service along the route 103 by means of the corresponding base stations, BS, i.e., BS1 to BS3. It is clear from figure 1B that MNO/BS redundancy cannot be supported along the section 105 of the route 103. In such a case when the required redundancy level is 2 BSs such route will be determined as not feasible. When a route is not feasible it may be indicated which segments of the route are not feasible so that the receiver may take further actions on such information.

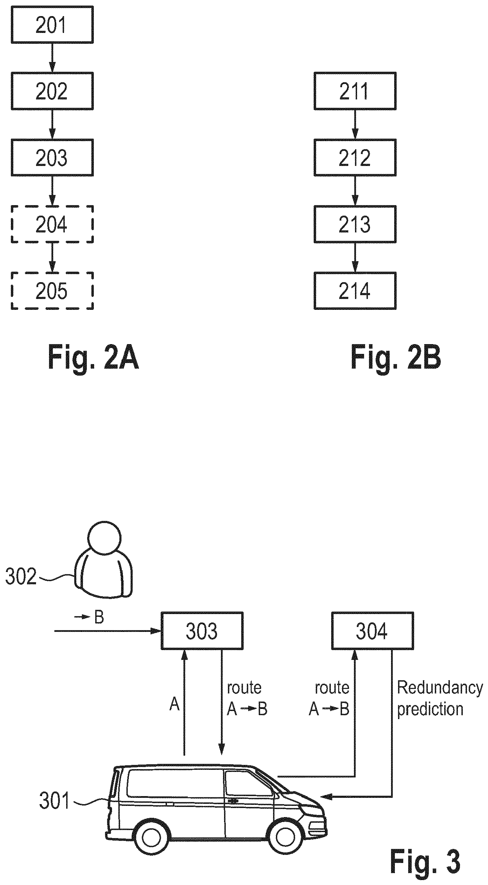

Figure 2A presents a block diagram of a method of a terminal according to the present invention. First the method determines route information in step 201. Subsequently, the method determines a level of required redundancy of one or more communication links for a route, the route being defined according to the route information in step 202, and lastly the method determines in step 203 a feasibility of the route according to the level of required redundancy of one or more communication links. Optionally, at step 204, when it is determined that the route is not feasible, the route is adjusted so that the criterion of the level of required redundancy of one or more communication links is met. As another subsequent option, the terminal may perform step 205 to execute the route i.e. to follow the route.

In this method any of the steps 201 to 203 may be at least partly delegated to an external entity. For example, at step 201 the terminal only indicates a starting point and an destination point while a route is generated by an external route management function or by an external network authority function. As another example, at step 202 the level of required redundancy of one or more communication links may be provided, possibly after a suitable request, e.g. from a network authority function or from a control center. As yet another example, the information on feasibility of the route may be provided, after a suitable request, from a network authority function. Consequently, the meaning of a term 'determining' may encompass exchange of information with one or more external devices by the terminal. More information on such options will be given in relation to specific scenarios according to figures 3 to 6.

Figure 2B presents a block diagram of a method of a remote device according to the present invention. The method comprises the step of receiving 211, from one or more external device(s), route information and then the step 212 of receiving, from any of the one or more external device(s), a level of required redundancy of one or more communication links for the route. Subsequently, the method determines in step 213 a feasibility of the route according to the level of required redundancy of one or more communication links, and transmits in step 214, to any of the one or more external device(s), a route feasibility information indicating the determined feasibility. If the route is not feasible the route feasibility information may implicitly indicate that the route is not feasible by including an adjusted route meeting the criterion of the level of required redundancy of one or more communication links.

Figures 3 to 6 present different operating scenarios where the steps according to the method of the present invention are set up on different devices.

Figure 3 presents a first communication scenario for determining route feasibility according to the present invention. To address the problem, in this scenario an AV 301 is located at a point A and has a destination at a point B 302, which may be input by a user. A route management function 303, located in the backend or within the vehicle, provides (based on the A and B received from the AV) to the AV the specific route to follow from A to B. The AV requests information from a network authority 304 to assess a feasibility of the route by sending the route A->B to the network authority 304. This request may be sent for the current or a future time. The network authority 304 provides to the AV 301 information to assess the feasibility of the route. This information may comprise a level of feasible redundancy of the provided route A->B (the feasible redundancy may be indicated per the complete route or per each route segment. When it is indicated for the complete route, the minimum feasible redundancy among the respective segments of the route may apply as such indication), i.e. the minimum number of available base stations at every point of the route, a predictive Quality of Service, pQoS, profile over the route for different MNOs or radio access technologies, RATs. Having that information, the AV 301 decides if the level of predicted redundancy and the pQoS profile guarantee feasibility of the route according to a level of required redundancy (set for example by the terminal).

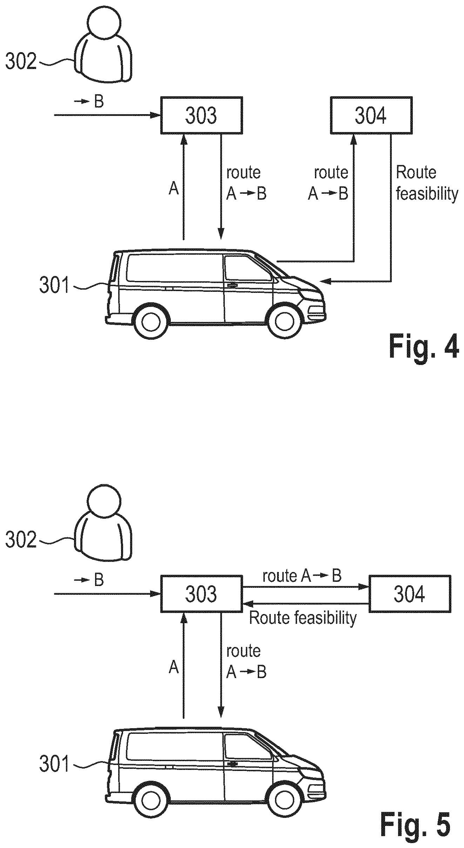

Figure 4 presents a second communication scenario for determining route feasibility according to the present invention. To address the problem, in this scenario an AV is located at a point A 301 and has a destination at a point B 302, which may be input by a user. A route management function 303, located in the backend or within the vehicle, provides to the AV the specific route to follow from A to B based on the A and B received from the AV. The AV requests information from a network authority 304 on feasibility of the route by sending the route A->B to the network authority 304 and a desired level of required redundancy along the provided route A->B as well as optionally a desired QoS level along the provided route A->B. This request may be sent for the current or a future time. The network authority 304 provides to the AV 301 information on the feasibility of the route. The indication information on the feasibility of the route may be as simple as a 1-bit flag.

Figure 5 presents a third communication scenario for determining route feasibility according to the present invention. An AV 301 is located at a point A and has a destination at a point B 302, which may be input by a user. In formation on A and B is provided to the route management function 303. A level of required redundancy along the provided route A->B as well as optionally a desired QoS level along the provided route A->B may be provided by the terminal 301 to the route management function 303. The route management function 303 located in the backend initiates an exchange with the network authority 304 to decide on a feasibility of the route from A to B. The route management function 303 requests the network authority 304 to assess the feasibility of the route. To this end the route management function 303 sends the route to the network authority 304 and the level of required redundancy along the provided route A->B as well as optionally a desired QoS level along the provided route A->B. The network authority 304 assesses the feasibility of the route, taking into account the required criteria. Subsequently, route management function 303 receives an indication about the feasibility of the provided route with the desired criteria. If the route is not feasible in line with the desired criteria, the route management function 303 may generate an alternative route and repeat the verification by the network authority 304 for the alternative route. Once a feasible route is found, the AV may use the route.

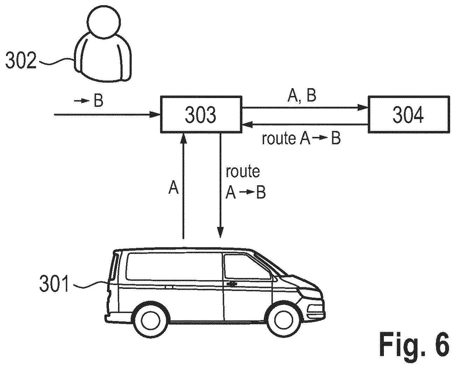

Figure 6 presents a fourth communication scenario for determining route feasibility according to the present invention. An AV 301 is located at a point A and has a destination at a point B 302, which may be input by a user. Information on A and B is provided to the route management function 303. A level of required redundancy along the provided route A->B as well as optionally a desired QoS level along the provided route A->B may be provided by the terminal 301 to the route management function 303. The route management function 303 located in the backend initiates an exchange with the network authority 304 to determine a feasible route from A to B based on the A and B e.g. received from the AV 301. To this end the route management function 303 sends only points A and B to the network authority 304 and the level of required redundancy along the desired route A->B as well as optionally a desired QoS level along the desired route A->B. The network authority 304 determines a feasible route, taking into account the required criteria. Hence, in comparison to the scenario of figure 5, here the network authority 304 is equipped with routing capabilities to determine navigation routes between points A and B. An example of this is running a sub-component from the route management function. Since the network authority 304 is aware of the networks' level of required redundancy and optionally pQoS, the network authority 304 is in the best position to determine or at least adjust a route to the desired criteria for the route. Once found, a feasible route between A and B is provided to the route management function 303. The route management function 303 sends the final, feasible route to the vehicle. Once a feasible route is found, the AV may use the route.

### Reference signs

- 101: route start point
- 102: route destination point
- 103: route
- 104: route point
- 105: route section lacking redundancy

- 201: determining a route according to the route information
- 202: determining a level of required redundancy of one or more communication links for the route
- 204: determining feasibility of the route according to the level of required redundancy of one or more communication links
- 205: when it is determined that the route is not feasible, adjust the route so that the criterion of the level of required redundancy of one or more communication links is met
- 206: execute the route

- 211: receiving, from one or more external device(s), route information
- 212: receiving, from any of the one or more external device(s), a level of required redundancy of one or more communication links for the route
- 213: determining feasibility of the route according to the level of required redundancy of one or more communication links
- 214: transmitting, to any of the one or more external device(s), a route feasibility information indicating the determined feasibility

- 301: AV
- 302: user
- 303: route management function
- 304: network authority function

## Claims

1. A method for determining route feasibility by a user equipment, UE, the method comprising the steps of:
- determining (201) route information,
- determining (202) a level of required redundancy of one or more communication links for a route, the route being defined according to the route information,
- determining (203) feasibility of the route according to the level of required redundancy of one or more communication links.

2. The method according to claim 1, wherein the method further comprises a step of adjusting (204) the route information so that the criterion of the level of required redundancy of one or more communication links is met for the route according to the adjusted route information.

3. The method according to any one of the preceding claims, wherein the step of determining the feasibility is executed by transmitting the route information and the level of required redundancy information to one or more remote server(s) (303, 304) and receiving a route feasibility information from at least one from the one or more remote server(s) (303, 304).

4. The method according to any one of the preceding claims, wherein the route feasibility information indicates a route determined according to the route information for meeting the criterion of the level of required redundancy of one or more communication links.

5. The method according to any one of the preceding claims, wherein the level of required redundancy of one or more communication links further comprises a quality of service, QoS, indication.

6. The method according to claim 5, wherein the step of determining the feasibility further comprises obtaining predictive Quality of Service, pQoS, information from one or more mobile network operators, MNOs, providing service along the route and matching the pQoS with the QoS indication.

7. The method according to any one of the preceding claims, wherein the remote server is one or more of network authority function (304) or a route management function (303).

8. The method according to any one of the preceding claims, wherein the level of required redundancy indicates a number of base stations, a number of MNOs and/or radio access technologies, RATs.

9. The method according to any one of the preceding claims 1 to 8, wherein the level of required redundancy indicates a dual connectivity, DC, requirement.

10. The method according to any one of the preceding claims, wherein the level of required redundancy further indicates a deviation information indicating allowable deviation along the route from the indicated level of required redundancy.

11. A method for determining route feasibility by a server (304), the method comprising the steps of:
- receiving (211), from one or more external device(s) (301, 303), route information,
- receiving (212), from any of the one or more external device(s) (301, 303), a level of required redundancy of one or more communication links for a route, the route being defined according to the route information, and
- determining (213) feasibility of the route according to the level of required redundancy of one or more communication links.

12. The method according to claim 11, further comprising the step of transmitting (214), to any of the one or more external device(s) (301, 303), a route feasibility information indicating the determined feasibility.

13. An apparatus comprising a processor configured to execute all steps of any of the methods according to any of claims 1 to 12.

14. A computer program comprising instructions which, when the program is executed by a computer, cause the computer to carry out all the steps of the method according to any of claims 1 to 12.

15. A computer-readable storage medium comprising instructions which, when executed by a computer, cause the computer to carry out all the steps of the method according to any of claims 1 to 12.
